(19) Europäisches Patentamt
European Patent Office
Office européen des brevets

(11) **EP 2 345 511 A2**

(12) **EUROPÄISCHE PATENTANMELDUNG**

(43) Veröffentlichungstag:
**20.07.2011 Patentblatt 2011/29**

(51) Int Cl.:
***B25J 9/16*** *(2006.01)*

(21) Anmeldenummer: **11000101.3**

(22) Anmeldetag: **07.01.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **13.01.2010 DE 102010004474**

(71) Anmelder: **KUKA Laboratories GmbH**
**86165 Augsburg (DE)**

(72) Erfinder: **Weiss, Martin, Dr.**
**86459 Margertshausen (DE)**

(74) Vertreter: **Schlotter, Alexander Carolus Paul**
**Wallinger Ricker Schlotter Foerstl**
**Patent- und Rechtsanwälte**
**Zweibrückenstrasse 5-7**
**80331 München (DE)**

(54) **Steuerung für einen Manipulator**

(57) Nach einem erfindungsgemäßen Verfahren zum Steuern eines Manipulators, insbesondere eines Roboters (1), mittels einer Steuerung (2), die eine Kontrollschicht mit einem Kontrollmodul (B, $R_1$, $R_1$'; $R_2$, $R_2$', $R_2$"; $R_3$, $R_3$'; $R_4$, Ü) zur Ausgabe von Steuergrößen ($P_i$, $q_j$, $n_k$, $T_l$, $i_s$) aufweist, wobei in der Kontrollschicht ein erstes Kontrollmodul ($R_1$ $R_2$; $R_3$) sowie eine zusätzliche Schnittstelle für ein hiervon verschiedenes zweites Kontrollmodul ($R_1$'; $R_2$', $R_2$"; $R_3$') vorgesehen ist, arbeitet in einer Kontrollschicht das erste Kontrollmodul ($R_1$; $R_2$; $R_3$) und zugleich ein hiervon verschiedenes zweites Kontrollmodul ($R_1$'; $R_2$', $R_2$"; $R_3$'), sofern es mit der Schnittstelle verbunden ist.

## Fig. 1

EP 2 345 511 A2

**Beschreibung**

Die vorliegende Erfindung betrifft ein Verfahren und eine Vorrichtung zum Steuern eines Manipulators, insbesondere eines Roboters, wobei eine Manipulatorsteuerung wenigstens eine Kontrollschicht mit einem Kontrollmodul zur Ausgabe von Steuergrößen aufweist.

Heutige Manipulatorsteuerungen umfassen im Allgemeinen mehrerer Kontrollschichten. So werden beispielsweise aus Bewegungsbefehlen in einer Bewegungsplanungs- und Interpolator-Schicht zunächst Achs-Soll-Stellungen generiert, aus denen eine Lage-Regelschicht durch Vergleich mit Achs-Ist-Stellungen Solldrehzahlen bestimmt, die ihrerseits in einer Drehzahl-Regelschicht in Soll-Leistungen der Antriebe umgesetzt und in einer Strom-Regelschicht realisiert werden.

Die Algorithmen und Strukturen der einzelnen Kontrollschichten sind dabei vom Hersteller aus Sicherheitsgründen fest vorgegeben, so dass Abnehmer und Anwender sie nur sehr eingeschränkt ändern, beispielsweise ab initio als variabel vorgegebene Parameter wie die Verstärkungen eines PID-Reglers in gewissen Grenzen einstellen können. Denn fehlerhafte, insbesondere instabile Kontrollschichten können zu einem Fehlverhalten des Manipulators führen und seine sowie die Sicherheit seiner Umgebung gefährden.

Dies erschwert es andererseits höherqualifizierten Anwendern, beispielsweise Herstellern von mechanischen Kinematiken, die die Steuerung zukaufen und an ihre Manipulatoren anpassen wollen, Kontrollschichten und damit den Betrieb des Manipulators zu optimieren.

Aus der DE 10 2004 031 485 A1 der Anmelderin, auf die vollinhaltlich Bezug genommen und deren Offenbarungsinhalt ausdrücklich in die vorliegenden Anmeldung einbezogen wird, ist daher eine Steuerung von Handhabungsgeräten, insbesondere Mehrachs-Industrierobotern bekannt, bei der durch eine Schnittstellenfunktion überprüft wird, ob optional enthaltene Modelle, insbesondere kinematische Transformationen, verwendet werden. Dabei wird stets das eine, für das jeweilige Handhabungsgerät spezifizierte Modell verwendet.

Die EP 1 131 686 B1 lehrt ein Verfahren zur Programmierung von Steuerungen, bei dem ein anwenderkonfigurierbares Regler-Objekt über eine Schnittstelle mit anderen Objekten zu einer konkreten Steuerung verschaltet wird. Auch hier wird stets das eine, für den jeweilige technische Prozess spezifizierte Modul verwendet.

Sofern dabei das gewählte Modell bzw. Modul fehlerhaft ist, schlägt dies jeweils auf die komplette Steuerung durch, die somit beispielsweise nicht mehr dazu eingesetzt werden kann, einen Manipulator in diesem Fehlerfall sicher stillzusetzen.

Aufgabe der vorliegenden Erfindung ist es, einen Manipulator besser zu steuern.

Zur Lösung dieser Aufgabe ist eine Steuerung nach dem Oberbegriff des Anspruchs 1 durch dessen kennzeichnende Merkmalen weitergebildet. Anspruch 5 stellt ein Verfahren zum Steuern eines Manipulators, Anspruch 9 bzw. 10 ein Computerprogramm bzw. ein Computerprogrammprodukt, insbesondere ein Speichermedium bzw. einen Datenträger, zur Durchführung eines erfindungsgemäßen Verfahrens unter Schutz. Die Unteransprüche betreffen vorteilhafte Weiterbildungen.

Eine erfindungsgemäße Steuerung für einen Manipulator, insbesondere einen Roboter, weist eine oder, bevorzugt, mehrere Kontrollschichten mit je wenigstens einem Kontrollmodul zur Ausgabe von Steuergrößen auf. Zwei oder mehr Kontrollschichten können dabei in Kaskadenform ausgebildet sein, so dass eine untergeordnete Kontrollschicht, die vorzugsweise mit einem schnelleren Takt arbeitet, Steuergrößen einer übergeordnete Kontrollschicht als Eingangsgrößen erhält.

Ein Kontrollmodul im Sinne der vorliegenden Erfindung verarbeitet allgemein Eingangsgrößen und ermittelt hieraus, insbesondere auf Basis eines vorgegebenen oder adaptiven Algorithmus, Ausgangs- bzw. Steuergrößen.

Insbesondere kann es sich dabei um einen Regler handeln, der als Eingangsgrößen sowohl Soll-Größen, beispielsweise Soll-Positionen, i.e. Lagen und/ oder Orientierungen eines Referenzpunktes bzw. -systems im Arbeitsraum, Soll-Gelenk- bzw. Achsstellungen, zum Beispiel Achs- oder Motorwinkel, Soll-Gelenkgeschwindigkeiten, etwa Motordrehzahlen, und/oder Soll-Antriebsgrößen, beispielsweise Motorleistungen, -momente, -spannungen oder -ströme, als auch Zustandsgrößen, zum Beispiel erfasste Ist-Größen für Positionen, Gelenkstellungen, Gelenkgeschwindigkeiten und/oder Antriebsgrößen erhält und hieraus, beispielsweise proportional zu einem Schleppfehler bzw. einer Regelabweichung zwischen Soll- und Ist-Größe, deren zeitlichen Ableitung und/oder zeitlichem Integral, Steuergrößen ausgibt. Zustandsgrößen können auch Werte externer Sensoren, beispielsweise von Kraft- oder Momentensensoren umfassen.

Gleichermaßen kann es sich bei einem Kontrollmodul um eine Steuerung im engeren Sinne handeln, bei der die Ausgangs- bzw. Steuergrößen unabhängig von erfassten Ist-Größen sind. Insofern kann insbesondere auch eine Bewegungsplanung, die aus Bewegungsbefehlen, die beispielsweise aus einem Arbeitsprogramm, einer manuellen Eingabe oder einer Stop- oder Interrupt-Anweisung resultieren, und/oder ein Interpolator, der Stütz- oder Zwischenpunkte auf einer von einer Bewegungsplanung geplanten Bahn generiert, ein Kontrollmodul im Sinne der vorliegenden Erfindung darstellen. In diesem Zusammenhang kann also der Begriff "Manipulatorsteuerung" in fachüblicher Weise sowohl Regler- als auch Steuerschichten im engeren, kybernetischen Sinne umfassen, wobei auch in einer Schicht sowohl Regler als auch Steuerungen vorgesehen sein können.

Erfindungsgemäß ist nun in wenigstens einer Kontrollschicht neben einem ersten Kontrollmodul wenigstens eine Schnittstelle für ein hiervon verschiedenes zweites Kontrollmodul vorgesehen. Sofern dann ein zweites Kontrollmodul mit der Schnittstelle verbunden ist, kann es in der Kontrollschicht zugleich mit dem ersten Kontrollmodul arbeiten, worunter sowohl ein paralleles als auch ein sequentielles Abarbeiten beider Module durch einen oder mehrere Prozessoren verstanden wird, wobei vorzugsweise in einem Regeltakt erstes und, sofern mit der Schnittstelle verbunden, zweites Kontrollmodul, ihre Steuergrößen ausgeben.

Dies ermöglicht es, für eine oder mehrere Kontrollschichten einerseits durch den Hersteller Standard-Implementierungen als erste Kontrollmodule vorzugeben, denen der Anwender eigene zweite Kontrollmodule nebenordnen kann. Dann können vorteilhafterweise wahlweise Steuergrößen von dem ersten Kontrollmodul oder dem zweiten Kontrollmodul verwendet, beispielsweise an eine untergeordnete Kontrollschicht oder an Aktuatoren des Manipulators ausgegeben werden. Insbesondere können in einem fehlerfreien Normalfall Steuergrößen von dem zweiten, durch den Anwender implementierten Kontrollmodul verwendet werden, sofern es mit der Schnittstelle verbunden ist. In einem Fehlerfall kann hingegen auf Steuergrößen von dem ersten, herstellerimplementierten Kontrollmodul zurückgegriffen werden.

Wenn beide Kontrollmodule zugleich arbeiten, ist das erste Kontrollmodul stets aktuell, so dass im Fehlerfall unverzüglich auf dieses umgeschaltet werden kann. Auf diese Weise können gefahrlos auch neue, vom Anwender entwickelte Kontrollmodule im realen Betrieb eingesetzt bzw. getestet werden.

Eine Schnittstellendefinition einer Schnittstelle zur Anbindung eines zweiten Kontrollmoduls in einer Kontrollschicht beschreibt bevorzugt die maximal möglichen bzw. zulässigen Ein- und/oder Ausgangsgrößen, zum Beispiel deren Anzahl, Einheit, Wertebereich, Dimension, Default-Werte oder dergleichen. Solche Ein- bzw. Ausgangsgrößen können beispielsweise Soll- bzw. Ist-Werte von Positions-, Strom-, Kraft- und/oder Momentengrößen, analoge und/oder digitale Ein- bzw. Ausgänge für Sensor- bzw. Aktorwerte, Statusinformationen von der bzw. für die Manipulatorsteuerung wie Bremsenfreigabe, Betriebsart, Kontrollmodulzustand oder dergleichen, Parameter, insbesondere Manipulator- bzw. sogenannte Maschinendaten wie kinematische Abmessungen, zum Beispiel Achslagen und - abstände, dynamische Kennwerte wie Masse, Trägheitstensor, Schwerpunktlage, Elastizitäten, Reibwerte und dergleichen umfassen.

Vorzugsweise ist eine Schnittstelle für eine Kontrollschicht einheitlich, beispielsweise entsprechend dem de-facto-Industriestandard MatLab-Simulink ausgebildet.

Müssen in einem Kontrollmodul kinematische oder dynamische Berechnungen erfolgen, beispielsweise für einen modellbasierten Regler oder Beobachter ein dynamisches Modell des zu steuernden Manipulators ausgewertet werden, sind gemäß einer bevorzugten Ausführung entsprechende Schnittstellen für ein kinematisches bzw. dynamisches Modell vorgesehen, wie dies in der eigenen Anmeldung DE 10 2004 031 485 A1 beschrieben ist, auf die insofern vollinhaltlich Bezug genommen wird. Dies ermöglicht es insbesondere, Regler unabhängig von dem jeweiligen Manipulator zu entwickeln und bei Bedarf mit dem entsprechenden von verschiedenen Kinematik- bzw. Dynamik-Modellen zu verbinden.

Gemäß einer bevorzugten Ausführung wird, insbesondere bei Initialisierung der Steuerung, überprüft, ob in einer Kontrollschicht ein zweites Kontrollmodul mit der Schnittstelle verbunden ist. Ist dies der Fall, wird dieses Kontrollmodul verwendet, i.e. seine Ausgangsgrößen an die untergeordnete Kontrollschicht bzw. Aktuatoren des Manipulators ausgegeben. Ist kein zweites Kontrollmodul mit der Schnittstelle verbunden, werden die vom ersten Kontrollmodul ermittelten Steuergrößen ausgegeben. Wird festgestellt, dass kein Standard-Modul vorhanden ist, kann das über die zusätzliche Schnittstelle angebundene zweite Modul genutzt werden.

Weitere Vorteile und Merkmale ergeben sich aus den Unteransprüchen und den Ausführungsbeispielen. Hierzu zeigt, teilweise schematisiert, die einzige:

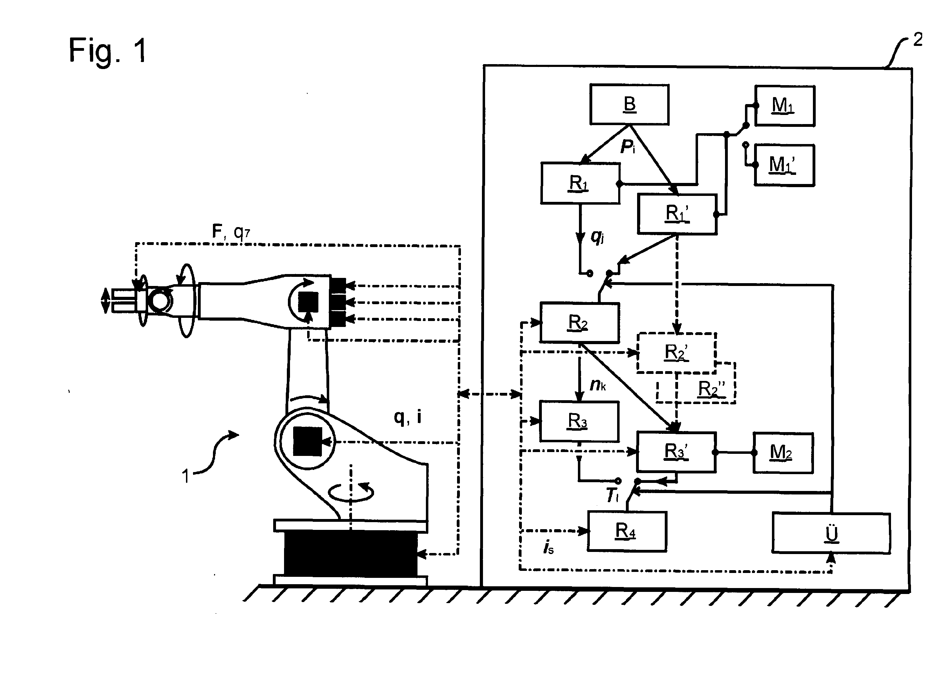

Fig. 1: den Aufbau bzw. Ablauf einer Steuerung eines Manipulator nach einer Ausführung der vorliegenden Erfindung.

Fig. 1 zeigt einen sechsachsigen Industrieroboter 1 mit einem beweglichen Greifer mit Kraftsensoren. Deren Erfassungswerte $\mathbf{F}$, die Greiferstellung $\mathbf{q}_7$ sowie die Gelenkwinkel $q_1,, q_6$ sowie die an den Antriebsmotoren anliegenden Ist-Ströme $i = (i_1.., i_7)$ werden, wie in Fig. 1 Strichpunktiert angedeutet, an eine Manipulatorsteuerung 2 übertragen.

Die Manipulatorsteuerung 2 weist eine Bewegungsplanung B auf, die, beispielsweise aus einem Ablaufprogramm oder einer manuellen Eingabe, verschiedene Soll-Posen des Roboters 1 vorgibt, zum Beispiel in Form von sukzessive anzufahrenden Soll-Positionen $P_i$, $P_{i+1}$,...für ein roboterfestes Werkzeugreferenzsystem ("Tool Center Point" TCP).

Diese werden an eine erste Kontroll- bzw. Steuerschicht (Index "1") weitergegeben, in der ein Kontrollmodul $R_1$ hieraus Soll-Gelenkwinkel $\boldsymbol{q}_i$, $\boldsymbol{q}_{i+1}$,... bestimmt.

Dabei ist vom Hersteller als Standard ein Interpolator $R_1$ fest vorinstalliert, der zum Beispiel die Soll-Positionen $P_i$, $P_{i+1}$,... zunächst durch Lösen der Rückwärts-Transformation $P = P(q) \Rightarrow q(P)$ in entsprechende Gelenkwinkel umrechnet und diese dann zum Beispiel linear interpoliert:

$$q_j = [q(P_{i+1}) - q(P_i)] \times j \times \Delta_j$$

Hierzu wird vorab, wie in Fig. 1 schematisch durch einen Schalter symbolisiert, eines von mehreren Kinematik-Modellen $M_1$, $M_1'$ ausgewählt und mit dem Interpolator $R_1$ verknüpft, das die Rückwärts-Transformation beschreibt.

In dieser ersten Kontrollschicht ist eine zusätzliche Schnittstelle vorgesehen, über die den Anwender einen anderen, beispielsweise zugekauften oder selbst entwickelten Interpolator $R_1'$ in die Manipulatorsteuerung 2 einbinden kann. Die Schnittstellendefinition beschreibt hierzu die möglichen Ein- und Ausgangsgrößen, vorliegend also Soll-Positionen $P_i$ als Ein- und Soll-Gelenkwinkel $q_j$ als Ausgabe.

Der zweite Interpolator $R_1'$ interpoliert zum Beispiel zunächst linear die Soll-Positionen $P_i$, $P_{i+1}$,... und rechnet diese anschließend durch Lösen der Rückwärts-Transformation in entsprechende Gelenkwinkel um:

$$q_j = q[(P_{i+1} - P_i) \times j \times \Delta_j]$$

Hierzu wird ebenfalls das entsprechende Kinematik-Modell $M_1$ mit dem Interpolator $R_1'$ verknüpft.

Beide Interpolatoren $R_1$, $R_1'$ arbeiten parallel, i.e. erhalten dieselben Bewegungsbefehle $P_i$, $P_{i+1}$,... und bestimmen - auf unterschiedliche Weise - Soll-Gelenkwinkel $q_j$ zur Weitergabe an eine untergeordnete zweite Kontroll- bzw. Regelschicht (Index "2").

Bei der Initialisierung wird für die einzelnen Schicht geprüft, ob auf einem permanenten Speicher, beispielsweise einer Festplatte, ein zweites Kontrollmodul (Index"' ") als Objekt-Datei vorhanden ist. Die Zuordnung der Kontrollmodule im Dateisystem zu den einzelnen Schichten erfolgt zum Beispiel durch Dateinamen.

Da im Ausführungsbeispiel festgestellt wird, dass mit dem zweiten Interpolator $R_1'$ ein zweites Kontrollmodul vorhanden ist, werden in dem zunächst erläuterten Normalfall Steuergrößen $q_j$ von diesem zweiten Kontrollmodul verwendet, i.e. an die untergeordnete zweite Kontrollschicht weitergegeben, wie in Fig. 1 durch einen Schalter symbolisiert. Der erste Interpolator $R_1$ läuft parallel mit, i.e. wird zur Laufzeit der Manipulatorsteuerung 2 ebenfalls mit den Soll-Werten $P_i$, $P_{i+1}$,..., versorgt, ohne dass im Normalfall seine Ausgabegrößen an die zweite Kontrollschicht weitergereicht werden.

Die zweite Kontrollschicht bildet eine Lageregelung, die als Eingangsgrößen einerseits Soll-Gelenkwinkel $q_j$ von der ersten Kontrollschicht und andererseits Erfassungs- bzw. Istwerte ($q$, $F$) von Sensoren, beispielsweise Encodern, Kraftsensoren und dergleichen erhält.

Zur Erläuterung wird zunächst angenommen, dass in der zweiten Kontrollschicht nur ein erstes Kontroll- bzw. Regelmodul $R_2$ als Standardimplementierung vorhanden ist. Dieses bestimmt beispielsweise als einfacher Proportionalregler aus der Regelabweichung zwischen Soll- und Ist-Gelenkwinkeln Soll-Drehzahlen

$$n_k = C_1 \times (q_j - q)$$

und gibt diese an eine untergeordnete dritte Kontrollschicht in Form eines Drehzahlreglers $R_3$ bzw. $R_3'$ weiter.

Die Schnittstellendefinition des ersten Regelmoduls $R_2$ umfasst auch die Eingabe von Kraftwerten $F$ oder Werten anderer externer Sensoren, um auch die Implementierung von Kraftregelungen und dergleichen zu ermöglichen. An diesen Eingängen anliegende Eingangswerte werden im erste Regelmodul $R_2$ nicht genutzt.

Bei der Initialisierung wird festgestellt, dass in der dritten Kontrollschicht neben einem ersten Standard-Drehzahlregler $R_3$ ein alternativer zweiter Drehzahlregler $R_3'$ mit der entsprechenden Schnittstelle verbunden ist. Daher werden wiederum beide Drehzahlregler $R_3$ bzw. $R_3'$ mit den entsprechenden Eingangsgrößen, im Ausführungsbeispiel den Soll-Drehzahlen $n_k$ und den Ist-Gelenkwinkel $q_j$ versorgt, aus denen durch Differentation die Ist-Antriebsdrehzahlen ermittelt werden können. Jedoch werden, wie in Fig. 1 durch einen Schalter symbolisiert, im Normalfall nur die Steuergrößen $T_i$ an einen Stromregler $R_4$ einer vierten Kontrollschicht weitergereicht, die der zweite Drehzahlregler $R_3'$ ausgibt.

Dieser umfasst im Gegensatz zu dem ersten Standard-Drehzahlregler $R_3$ eine Reibungskompensation und ist hierzu mit einem entsprechenden dynamischen Reibmodell $M_2$ verknüpft.

Der Stromregler $R_4$ ermittelt anhand der Soll-Größe $T_i$ der dritten Kontroll- bzw. Drehzahlregel-Schicht und den erfassten Ist-Stromwerten $i$ Stellgrößen $i_s$, die er an die Antriebe des Roboters 1 ausgibt.

Erkennt eine Überwachung Ü, die ebenfalls mit einigen oder allen der erfassten Ist-und der in den einzelnen Kontrollschichten ausgegebenen Stellgrößen versorgt wird, dass ein Fehlerfall vorliegt, insbesondere ein Fehlerfall, der auf die Verwendung der alternativen zweiten Kontrollmodule $R_1'$ oder $R_3'$ zurückgeht, schaltet sie auf die ersten Kontrollmodule $R_1$, $R_3$, i.e. die vom Herstellervorgesehen, getestete und sichere Standardimplementierung um, wie in Fig. 1 durch die Schalter symbolisiert. Dies ist erfindungsgemäß möglich, da diese Kontrollmodule zugleich mit den alternativen zweiten Kontrollmodulen $R_1'$, $R_3'$ arbeiten, i.e. mit Eingangsgrößen versorgt werden und Ausgangsgrößen ermitteln.

Somit kann die Manipulatorsteuerung 2 beispielsweise einen sicheren STOP 1 oder STOP 2 durchführen, i.e. den Roboter 1 gesteuert und damit rascher stillsetzen, ohne auf die alternative Implementierung zurückgreifen zu müssen, die den Fehlerfall beispielsweise unter Umständen gerade verursacht hat.

Dies erlaubt dem Anwender, aber auch dem Hersteller, in einer bestehenden Steuerung modular gekapselte Funktionalitäten zu implementieren und gefahrlos zu testen. Da die Standard-Implementierung in Form der ersten Module unverändert bleiben und somit als sicher eingestuft werden kann, müssen nur die neuen, zweiten Module getestet werden.

Als Beispiel ist in Fig. 1 strichliert ein zweites Kontroll- bzw. Lage-Regel-Modul $R_2$' skizziert, welches eine Kraftregelung umsetzt und mit der in der zweiten Kontrollschicht vorgesehenen Schnittstelle verbunden werden kann.

Hierzu umfasst die Schnittstellendefinition der zweiten Kontroll- bzw. Lage-RegelSchicht neben den Ist-Gelenkwinkeln *q* auch die Werte *F* der Kraftsensoren am Greifer, die in dem Standard-Lageregler $R_2$ nicht genutzt werden.

Der Lageregler $R_2$' bestimmt rein beispielhaft aus den erfassten Ist-Kräften F Soll-Drehzahlen

$$n_k = C_1 \times (q_j - q) + C_2 \times F$$

, so dass der Roboter 1 Kräften am Greifer nachgibt. Er gibt diese an die dritte Kontrollschicht weiter, wobei zur besseren Übersichtlichkeit die Möglichkeit, auf den ersten bzw. Standard-Lageregler $R_2$ umzuschalten, hier nicht dargestellt ist. Dies ist jedoch analog zu den vorstehend erläuterten Umschaltungen auf das erste Modul in der ersten bzw. dritten Kontrollschicht implementiert, um im Fehlerfall auf die bewährte Standard-Steuerung mit getesteten, zuverlässigen ersten Modulen $R_1$,...$R_4$ unverzüglich zurückgreifen zu können.

Ebenfalls strichliert angedeutet ist die Möglichkeit, mehrere alternative Kontrollmodule $R_2$', $R_2$" vorzusehen, die beispielsweise hierarchisch gegliedert sind, so dass bei Initialisierung stets das höchstwertige als zweites Kontrollmodul ausgewählt wird, im Ausführungsbeispiel etwa ein modellbasiertes Lageregelmodul $R_2$", welches zum Beispiel auf ein dynamisches Modell des Roboters 1 zur Auswertung von dessen Massenmatrix *M*(*q*) und generalisiertem Kraftvektor *h*(*q*, d*q* /dt) zur Beschreibung von gyroskopischen, Reib- und/ oder Gravitationskräften zurückgreift (nicht dargestellt).

Bezugszeichenliste

| | |
|---|---|
| 1 | Roboter |
| 2 | Steuerung |
| B | Bewegungsplanung |
| *F* | Kraftwerte |
| *i* | Stromwerte |
| M1,...M2 | Modell |
| *P* | Soll-Positionen |
| *q* | Achswinkel |
| R1,...R4 | Kontrollmodul |
| Ü | Überwachung |

**Patentansprüche**

**1.** Steuerung (2) für einen Manipulator, insbesondere einen Roboter (1), die eine Kontrollschicht mit einem Kontrollmodul (B, $R_1$, $R_1$'; $R_2$, $R_2$', $R_2$"; $R_3$, $R_3$'; $R_4$, Ü) zur Ausgabe von Steuergrößen ($P_i$, $q_j$, $n_k$, $T_l$, $i_s$) aufweist,
**dadurch gekennzeichnet, dass**
in der Kontrollschicht ein erstes Kontrollmodul ($R_1$; $R_2$; $R_3$) sowie eine zusätzliche Schnittstelle für ein hiervon verschiedenes zweites Kontrollmodul ($R_1$'; $R_2$', $R_2$"; $R_3$') vorgesehen ist.

**2.** Steuerung nach Anspruch 1, **dadurch gekennzeichnet, dass** sie wenigstens zwei, insbesondere kaskadierte, Kontrollschichten aufweist.

**3.** Steuerung nach einem der vorhergehenden Ansprüche, **dadurch gekennzeichnet, dass** eine, insbesondere für eine Kontrollschicht einheitliche, Schnittstelle zur Eingabe von Zustandsgrößen (*q*, *F*, *i*) in ein Kontrollmodul ($R_2$, $R_2$', $R_2$"; $R_3$, $R_3$'; $R_4$) und/oder zwischen einem Kontrollmodul ($R_1$, $R_1$'; $R_2$, $R_2$', $R_2$") und einem kinematischen oder dynamischen Modell ($M_1$, $M_1$'; $M_2$) vorgesehen ist.

**4.** Steuerung nach einem der vorhergehenden Ansprüche, **dadurch gekennzeichnet, dass** ein Kontrollmodul (B, $R_1$, $R_1$'; $R_2$, $R_2$', $R_2$"; $R_3$, $R_3$'; $R_4$, Ü) gekapselt ist und/oder eine standardisierte Schnittstelle aufweist.

**5.** Verfahren zum Steuern eines Manipulators, insbesondere eines Roboters (1), mittels einer Steuerung (2) nach einem der vorhergehenden Ansprüche, **dadurch gekennzeichnet, dass**
in einer Kontrollschicht das erste Kontrollmodul ($R_1$ $R_2$; $R_3$) arbeitet; und zugleich ein hiervon verschiedenes zweites Kontrollmodul ($R_1$'; $R_2$', $R_2$"; $R_3$') arbeitet, sofern es mit der Schnittstelle verbunden ist.

**6.** Verfahren nach Anspruch 5, **dadurch gekennzeichnet, dass** wahlweise Steuergrößen von dem

ersten Kontrollmodul ($R_1$ $R_2$; $R_3$) oder dem zweiten Kontrollmodul ($R_1$'; $R_2$', $R_2$"; $R_3$') verwendet werden.

7. Verfahren nach Anspruch 6, **dadurch gekennzeichnet, dass** in einem Normalfall Steuergrößen von dem zweiten Kontrollmodul ($R_1$'; $R_2$', $R_2$"; $R_3$') verwendet werden, sofern es mit der Schnittstelle verbunden ist; und/oder in einem Fehlerfall Steuergrößen von dem ersten Kontrollmodul ($R_1$; $R_2$; $R_3$) verwendet werden.

8. Verfahren nach einem der vorhergehenden Ansprüche 5 bis 7, **dadurch gekennzeichnet, dass**, insbesondere bei Initialisierung der Steuerung (2), überprüft wird, ob in einer Kontrollschicht ein zweites Kontrollmodul ($R_1$'; $R_2$', $R_2$"; $R_3$') mit der Schnittstelle verbunden ist

9. Computerprogramm, dass ein Verfahren nach einem der Ansprüche 5 bis 8 ausführt, wenn es in einer Steuerung nach einem der Ansprüche 1 bis 4 abläuft.

10. Computerprogrammprodukt mit Programmcode, der auf einem maschinenlesbaren Träger gespeichert ist und ein Computerprogramm nach Anspruch 9 umfasst.

Fig. 1

EP 2 345 511 A2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004031485 A1

- EP 1131686 B1